# EUROPEAN PATENT APPLICATION

(11) **EP 4 755 951 A1**
(43) Date of publication of application: **10.06.2026**
(21) Application number: 24217379.7
(22) Date of filing: 04.12.2024
(51) Int. Cl.: C08J 3/20, C08J 11/06, C08K 11/00, C08J 3/22

(54) **POLYMER RECYCLING WITH AGGLOMERATES OF PYROLYZED BIOMASS**

(71) Applicant: Carboganic BV, 1861 Meise (BE)
(72) Inventor: TAMBUYSER, Bart, 1861 Meise (BE)
(74) Representative: Ipsilon Belgium

(57) **Abstract**

The invention relates to the production of polymer compositions by compounding at least two immiscible thermoplastic polymers, preferably obtained by mechanical recycling, and agglomerates of pyrolyzed biomass.

## Description

### Field

The invention relates to the production of polymer compositions by compounding at least two immiscible thermoplastic polymers, preferably obtained by mechanical recycling, and agglomerates of pyrolyzed biomass.

### Background

The widespread use of plastics has led to a significant accumulation of polymer-based waste. Traditional disposal methods, including landfilling and incineration, are increasingly unsustainable due to their environmental impact. Landfills contribute to long-term pollution, occupying valuable land resources and releasing harmful substances as polymers degrade over extended periods. Incineration, while capable of reducing waste volume, generates greenhouse gases and other toxic emissions, further exacerbating environmental challenges.

Recycling plastic materials and items offers a sustainable solution to mitigate these issues by enabling the recovery and reuse of valuable materials. Recycling not only reduces the volume of polymer waste entering landfills but also conserves resources by decreasing the need for virgin polymer production, which is energy-intensive and reliant on finite fossil fuel reserves. Furthermore, as regulatory frameworks worldwide impose stricter requirements for waste management and recycling, industries face growing economic and legal pressures to adopt efficient recycling practices.

Despite the clear advantages of recycling, the heterogeneity of polymer waste streams, and the immiscibility of many polymers pose significant challenges. Addressing these issues requires the development of innovative methods and technologies to improve the quality and efficiency of polymer recycling, ensuring that recycled materials can meet the performance standards of their virgin counterparts and be reintegrated into high-value applications.

Specifically, the mechanical recycling of thermoplastic polymers is often plagued by the contamination with other immiscible thermoplastic polymers, leading to undesirable mechanical properties such as a low melt strength, a short elongation at break, a high occurrence of shrinkage voids, odors and the release of volatile organic compounds (VOCs).

Although the admixture of pyrolyzed biomass in recycled thermoplastic polymers has been suggested to obtain better mechanical properties (e.g. Lepak-Kuc, S., Kiciński, M., Michalski, P. P., Pavlov, K., Giorcelli, M., Bartoli, M., & Jakubowska, M. (2021). Innovative Biochar-Based Composite Fibres from Recycled Material. *Materials,* 14(18), 5304. https://doi.org/10.3390/ma14185304), such approaches leave much to be desired. It is difficult to compound the pyrolyzed biomass with the thermoplastic polymers to obtain a homogeneous phase, especially if more extra additives are added. Moreover, the powdery form of the pyrolyzed biomass is difficult to handle.

Hence, there is a need in the art for methods of producing polymer compositions from immiscible thermoplastic polymers, preferably obtained by mechanically recycling a plastic material or item, which has good mechanical properties (high melt strength, longer elongations at break, a lower occurrence of shrinkage voids) via an industrially convenient method (easy compounding to form a homogeneous mixture, limited use of fine powders) characterized by a low release of odors and VOCs during production and use.

### Description of the invention

In an aspect, the invention provides a method of producing a polymer composition, comprising the steps of:
(a) obtaining at least two immiscible thermoplastic polymers, preferably by mechanically recycling a plastic material;
(b) obtaining agglomerates of a pyrolyzed biomass, wherein the agglomerates have a mass-weighted mean particle size of 250 µm to 7500 µm; and
(c) compounding the at least two immiscible thermoplastic polymers with the agglomerates.

Such a method may be called a method according to or of the invention herein.

The method according to the invention answers to the need in the art presented above. As discussed below, the obtained polymer composition has good mechanical properties (high melt strength, long elongation at break, a low occurrence of shrinkage voids), while the method largely circumvents the use of powders during processing, and makes it easy to form a homogeneous mixture during compounding in step (c). Furthermore, odor and VOC emission during the method, and from the obtained polymer composition after the method has been performed, is reduced.

### Immiscible thermoplastic polymers

A thermoplastic polymer is a polymer that becomes pliable or moldable upon heating to a specific temperature and solidifies upon cooling, a process that is reversible and repeatable without significant chemical change or degradation. Thermoplastic polymers are characterized by their ability to flow in the molten state, enabling processing by techniques such as injection molding, extrusion, and thermoforming. These polymers can be amorphous, semi-crystalline, or crystalline in nature, and their thermal behavior is typically defined by parameters such as the glass transition temperature (Tg) and, if applicable, the melting temperature (Tm).

The immiscibility of thermoplastic polymers refers to the inability of the polymers to form a homogeneous, single-phase material when combined, under standard processing conditions, due to differences in their chemical structure, polarity, crystallinity, molecular weight, or thermal properties. This results in phase separation, poor interfacial adhesion, and a lack of molecular-level compatibility, as evidenced by distinct phase boundaries observable through microscopy techniques or by the degradation of mechanical, thermal, or optical properties in the resulting blend relative to a compatible or miscible system.

In embodiments, the at least two immiscible thermoplastic polymers are two, three or four immiscible thermoplastic polymers, preferably two or three immiscible thermoplastic polymers, most preferably two immiscible thermoplastic polymers.

In embodiments, the at least two immiscible thermoplastic polymers are selected from polyethylene (PE), polypropylene (PP), polyvinyl chloride (PVC), polyvinylidene chloride, polystyrene (PS), polyamide (PA, nylon), polyethylene terephthalate (PET, PETE), polymethyl methacrylate (PMMA), ethylene vinyl alcohol (EVOH), thermoplastic polyurethane (TPU), polyethylene vinyl acetate (EVA, PEVA), acrylonitrile butadiene styrene (ABS), polycarbonate (PC), polyoxymethylene (POM), polyether ether ketone (PEEK), polylactic acid (PLA), and polyetherimide (PEI); preferably from polyethylene (PE), polypropylene (PP), polyvinyl chloride (PVC), polyvinylidene chloride, polystyrene (PS), polyamide (PA, nylon), polyethylene terephthalate (PET, PETE), polymethyl methacrylate (PMMA), ethylene vinyl alcohol (EVOH), thermoplastic polyurethane (TPU), polyethylene vinyl acetate (EVA, PEVA).

In embodiments, the at least two immiscible thermoplastic polymers are polyethylene (PE) and polypropylene (PP); or polyethylene (PE) and polyvinyl chloride (PVC); or polypropylene (PP) and polyvinyl chloride (PVC); or polyethylene (PE) and polystyrene (PS); or polypropylene (PP) and polystyrene (PS); or polyvinyl chloride (PVC) and polystyrene (PS); or polyethylene (PE) and polyamide (PA, nylon); or polypropylene (PP) and polyamide (PA, nylon); or polyvinyl chloride (PVC) and polyamide (PA, nylon); or polyethylene (PE) and polyethylene terephthalate (PET); or polypropylene (PP) and polyethylene terephthalate (PET); or polyvinyl chloride (PVC) and polyethylene terephthalate (PET); or polystyrene (PS) and polyamide (PA, nylon); or polystyrene (PS) and polyethylene terephthalate (PET); or polypropylene (PP) and polycarbonate (PC); or polyethylene (PE) and polymethyl methacrylate (PMMA); or polypropylene (PP) and polymethyl methacrylate (PMMA); or polyvinyl chloride (PVC) and polymethyl methacrylate (PMMA); or polyethylene terephthalate (PET) and polyamide (PA, nylon); or polyethylene terephthalate (PET) and polymethyl methacrylate (PMMA); or polycarbonate (PC) and polyamide (PA, nylon); or polylactic acid (PLA) and polypropylene (PP); or polylactic acid (PLA) and polyethylene (PE); or polylactic acid (PLA) and polycarbonate (PC); or polylactic acid (PLA) and acrylonitrile butadiene styrene (ABS); or polyoxymethylene (POM) and polypropylene (PP); or polyoxymethylene (POM) and polyvinyl chloride (PVC); or polyoxymethylene (POM) and polystyrene (PS); or polyoxymethylene (POM) and polyethylene (PE); or polyoxymethylene (POM) and polycarbonate (PC); or polyether ether ketone (PEEK) and polypropylene (PP); or polyether ether ketone (PEEK) and polyethylene (PE).

In embodiments, the at least two immiscible thermoplastic polymers are comprised in an initial polymer composition. In this context, wherever the at least two immiscible thermoplastic polymers are mentioned in a method step in this application, said method step could also be applied to such an initial mixture.

In embodiments, the weight concentration of one of the at least two immiscible thermoplastic polymers in the initial mixture is at least 50 wt.%, or at least 55 wt.%, or at least 60 wt.%, or at least 65 wt.%, or at least 70 wt.%, or at least 75 wt.%, or at least 80 wt.%, or at least 85 wt.%, or at least 90 wt.%, or at least 95 wt.%.

In embodiments, the weight concentration of one of the at least two immiscible thermoplastic polymers in the initial mixture is lower than 50 wt.%, or lower than 45 wt.%, or lower than 40 wt.%, or lower than 35 wt.%, or lower than 30 wt.%, or lower than 25 wt.%, or lower than 20 wt.%, or lower than 15 wt.%, or lower than 10 wt.%, or lower than 5 wt.%.

In embodiments, one of the at least two immiscible thermoplastic polymers can be considered a contamination, e.g. polyethylene with a weight concentration lower than 10 wt.% in combination with polypropylene with a weight concentration of more than 90 wt.%.

Obtaining in step (a) may mean that the at least two immiscible thermoplastic polymers come from any source, including but not limited to de novo polymerization or (mechanically) recycling plastic materials or items.

The difference between materials and items is insubstantial in the context of this invention. Without being limiting, a material generally refers to a given type of material, such as a plastic or a type of polymer, in bulk, in a simple shape, or without specifying the shape. An item on the other hand generally refers to products for the end consumer and/or in more complicated shapes.

In embodiments, the at least two immiscible thermoplastic polymers are obtained in step (a) from a waste stream. Preferably, the waste stream comprises at least 50 wt.%, or at least 55 wt.%, or at least 60 wt.%, or at least 65 wt.%, or at least 70 wt.%, or at least 75 wt.%, or at least 80 wt.%, or at least 85 wt.%, or at least 90 wt.%, or at least 95 wt.% of thermoplastic polymers. For example polypropylene recyclate (rPP) is polypropylene obtained from a waste stream via recycling, typically having a polyethylene contamination. The use of rPP without the addition of pyrolyzed biomass leads to low melt strengths, shorter elongations at break, a high occurrence of shrinkage voids, bad odours and the release of VOCs.

In embodiments, the at least two immiscible thermoplastic polymers are obtained in step (a) from a waste stream by mechanically recycling a plastic material or item. The plastic material or item preferably comprises at least 50 wt.%, or at least 55 wt.%, or at least 60 wt.%, or at least 65 wt.%, or at least 70 wt.%, or at least 75 wt.%, or at least 80 wt.%, or at least 85 wt.%, or at least 90 wt.%, or at least 95 wt.% of thermoplastic polymers.

Mechanical recycling refers to a process in which a plastic material or item is physically collected, sorted, cleaned, and reprocessed through mechanical means, such as shredding, grinding, washing, melting, or extrusion, to produce secondary raw materials or products without significantly altering the chemical structure of the polymers. This process is typically applied to thermoplastics and may include additional steps, such as washing, drying, pelletizing, or compounding, to improve the quality and usability of the recycled material. Mechanical recycling maintains the polymer's original molecular structure but may result in a degradation of physical or mechanical properties due to thermal and mechanical stresses encountered during processing. Preferably, the plastic material or item to be mechanically recycled is part of a waste stream, i.e. is a discarded material or item.

In embodiments, step (a) comprises mechanically recycling a plastic material or item, wherein the mechanically recycling comprises one or more of shredding, grinding, washing, separating, and pelletizing.

In embodiments, step (a) comprises mechanically recycling a plastic material or item, wherein the at least two immiscible thermoplastic polymers are formulated as pellets. For example, rPP is often formulated as pellets.

### Agglomerates of a pyrolyzed biomass

In embodiments, step (b) comprises the steps of:
(b1) pyrolyzing a biomass at a temperature of 220°C to 1000°C to form a crude composition;
(b2) controlling the particle size distribution of the crude composition to form the pyrolyzed biomass having a mass-weighted mean particle size of lower than 1000 µm; and
(b3) mixing the pyrolyzed biomass with an agglomerating polymer and one or more additives to form the agglomerates.

Pyrolyzing a biomass in step (b1) refers to the process of thermally decomposing the biomass in the absence of oxygen or under limited oxygen conditions at elevated temperatures, preferably at a temperature of 220°C to 1000°C. This process breaks down the organic components of the biomass into a mixture of gaseous, liquid, and solid products, including syngas, bio-oil, and biochar, without significant combustion. Pyrolyzing a biomass can be performed using various methods, such as slow pyrolysis, fast pyrolysis, or flash pyrolysis, depending on the heating rate, temperature, and residence time, to optimize the yield of desired products.

The biomass may be a wide range of organic materials derived from plant, agricultural, and forestry sources, collectively referred to as lignocellulosic biomass. This category encompasses materials rich in cellulose, hemicellulose, and lignin, such as wood chips, sawdust, straw, corn stover, sugarcane bagasse, and agricultural residues. Additionally, biomass may include energy crops like switchgrass, miscanthus, and hybrid poplar, as well as waste materials such as rice husks, coconut shells, and palm kernel shells. Other suitable feedstocks include aquatic biomass, such as algae, and non-lignocellulosic biomass, such as food waste or animal manure, which may be used alone or blended with lignocellulosic biomass. These diverse sources provide flexibility in feedstock selection, enabling the pyrolysis to be adapted to regional biomass availability and specific end-product requirements.

In embodiments, the biomass is a lignocellulosic biomass.

In embodiments, pyrolyzing the biomass in step (b1) is performed at a temperature of 200°C to 1000°C, or 200°C to 900°C, or 200°C to 800°C, or 200°C to 700°C, or 200°C to 600°C, or 200°C to 500°C, or 200°C to 400°C, or 200°C to 300°C, or 300°C to 1000°C, or 300°C to 900°C, or 300°C to 800°C, or 300°C to 700°C, or 300°C to 600°C, or 300°C to 500°C, or 300°C to 400°C, or 400°C to 1000°C, or 400°C to 900°C, or 400°C to 800°C, or 400°C to 700°C, or 400°C to 600°C, or 400°C to 500°C, or 500°C to 1000°C, or 500°C to 900°C, or 500°C to 800°C, or 500°C to 700°C, or 500°C to 600°C, or 600°C to 1000°C, or 600°C to 900°C, or 600°C to 800°C, or 600°C to 700°C, or 700°C to 1000°C, or 700°C to 900°C, or 700°C to 800°C.

In embodiments, pyrolyzing the biomass in step (b1) is performed at a temperature of 200°C to 300°C (mild pyrolysis), or 300°C to 500°C (slow pyrolysis), or 400°C to 600°C (fast pyrolysis), or 500°C to 800°C (flash pyrolysis).

The crude composition refers to the composition obtained by pyrolyzing the biomass in step (b1), which has not yet been subjected to controlling the particle size distribution in step (b2).

The method of the invention can be used with many different types of biomass and pyrolysis process parameters. A key feature is the agglomeration of the pyrolyzed biomass, not the origin or production of the pyrolyzed biomass. The same remark applies to any additional method steps performed, especially those after the compounding in step (c).

In embodiments, controlling the particle size distribution of the crude composition in step (b2) comprises reducing the mass-weighted mean particle size and decreasing the polydispersity index. In other words, the pyrolyzed biomass has a reduced mass-weighted mean particle size and a decreased polydispersity index compared to the crude composition.

In embodiments, controlling the particle size distribution of the crude composition in step (b2) comprises grinding and calibrating the crude composition, preferably wherein calibrating comprises sieving. Preferably, calibrating achieves a more narrow size distribution, i.e. a decreased polydispersity index.

In embodiments, the pyrolyzed biomass has a mass-weighted mean particle size of lower than 1000 µm, or lower than 950 µm, or lower than 900 µm, or lower than 850 µm, or lower than 800 µm, or lower than 750 µm, or lower than 700 µm, or lower than 650 µm, or lower than 600 µm, or lower than 550 µm, or lower than 500 µm, or lower than 450 µm, or lower than 400 µm, or lower than 350 µm, or lower than 300 µm, or lower than 250 µm, or lower than 200 µm, or lower than 150 µm, or lower than 100 µm.

In embodiments, the pyrolyzed biomass has a mass-weighted mean particle size of 10 µm to 1000 µm, or 10 µm to 950 µm, or 10 µm to 900 µm, or 10 µm to 850 µm, or 10 µm to 800 µm, or 10 µm to 750 µm, or 10 µm to 700 µm, or 10 µm to 650 µm, or 10 µm to 600 µm, or 10 µm to 550 µm, or 10 µm to 500 µm, or 10 µm to 450 µm, or 10 µm to 400 µm, or 10 µm to 350 µm, or 10 µm to 300 µm, or 10 µm to 250 µm, or 10 µm to 200 µm, or 10 µm to 150 µm, or 10 µm to 100 µm.

The particle properties, such as the particle size, of the pyrolyzed biomass is chosen based on the at least two immiscible thermoplastic polymers and the envisaged properties of the polymer composition.

In embodiments, the crude composition has a lower mass-weighted mean particle size than the agglomerates of the pyrolyzed biomass.

In embodiments, the pyrolyzed biomass has a lower mass-weighted mean particle size than the agglomerates of the pyrolyzed biomass. This is evident since the pyrolyzed biomass becomes part of the agglomerates.

The pyrolyzed biomass may be called a biocarbon.

In embodiments, the agglomerating polymer mixed with the pyrolyzed biomass and the one or more additives in step (b3) is able to act as a binding agent between the at least two immiscible thermoplastic polymers. In this context, the agglomerating polymer can be considered or called a binding agent.

In embodiments, the agglomerating polymer mixed with the pyrolyzed biomass and the one or more additives in step (b3) is miscible with and/or able to bind with each of the at least two immiscible thermoplastic polymers. Able to bind typically means non-covalent interaction.

In embodiments, the agglomerating polymer mixed with the pyrolyzed biomass and the one or more additives in step (b3) is identical to one of the at least two immiscible thermoplastic polymers.

The one or more additives mixed with the pyrolyzed biomass and the agglomerating polymer in step (b3) may be of various types. These additives are chosen in function of the desired properties of the polymer composition obtained by the method according to the invention.

In embodiments, the one or more additives mixed with the pyrolyzed biomass and the agglomerating polymer in step (b3) comprise stabilizers, plasticizers, fillers, flame retardants, colorants, impact modifiers, antistatic agents, lubricants, processing aids, foaming agents, nucleating agents, biocides, coupling agents, conductive additives, binding agents, compatibilizers, tackifiers, defoamers, antioxidants, UV stabilizers, heat stabilizers, antimicrobial agents, rheology modifiers, dispersing agents, crosslinking agents, chain extenders, viscosity reducers, slip agents, anti-blocking agents, optical brighteners, mold release agents, scent additives, thermal conductivity enhancers, friction modifiers, and/or adhesion promoters.

In embodiments, the one or more additives mixed with the pyrolyzed biomass and the agglomerating polymer in step (b3) comprise a binding agent, a compatibilizer and/or a tackifier.

In embodiments, the one or more additives mixed with the pyrolyzed biomass and the agglomerating polymer in step (b3) comprise a compatibilizer and/or a tackifier.

The one or more additives are chosen based on the at least two immiscible thermoplastic polymers and the desired properties of the polymer composition.

The mixing in step (b3) can be performed using any standard mixing equipment.

An agglomerate refers to a cluster of particles or granules bound together, either loosely or firmly, to form a larger, cohesive structure. This binding may occur through physical forces, such as van der Waals interactions, or chemical means, including the use of adhesives, sintering, or fusion. Agglomerates typically retain a discernible porous structure, with voids or interstitial spaces between the constituent particles, and their (overall) size and shape (of the cluster, i.e. of the cohesive structure) are determined by the method of formation.

Without being bound to this theory, the agglomerates are bound firmly enough to allow for processing as cohesive structures before the compounding in step (c), but disintegrate during the compounding, essentially releasing their components (at least pyrolyzed biomass, additives, agglomerating polymer).

By the agglomeration in step (b3), major process steps such as the compound in step (c) can be performed without the presence of a powdery form of pyrolyzed biocarbon. This is industrially easier to handle and makes the compounding to form a homogeneous mixture more efficient. The latter can be understood, without being bound to this theory, by the fact that agglomerates are first dispersed as larger particles during the compounding, before disintegrating into their components (at least pyrolyzed biomass, additives, agglomerating polymer), which are typically smaller.

In embodiments, the agglomerates have a mass-weighted mean particle size of 250 µm to 7500 µm, or 250 µm to 7400 µm, or 250 µm to 7300 µm, or 250 µm to 7200 µm, or 250 µm to 7100 µm, or 250 µm to 7000 µm, or 250 µm to 6900 µm, or 250 µm to 6800 µm, or 250 µm to 6700 µm, or 250 µm to 6600 µm, or 250 µm to 6500 µm, or 250 µm to 6400 µm, or 250 µm to 6300 µm, or 250 µm to 6200 µm, or 250 µm to 6100 µm, or 250 µm to 6000 µm, or 250 µm to 5900 µm, or 250 µm to 5800 µm, or 250 µm to 5700 µm, or 250 µm to 5600 µm, or 250 µm to 5500 µm, or 250 µm to 5400 µm, or 250 µm to 5300 µm, or 250 µm to 5200 µm, or 250 µm to 5100 µm, or 250 µm to 5000 µm, or 250 µm to 4900 µm, or 250 µm to 4800 µm, or 250 µm to 4700 µm, or 250 µm to 4600 µm, or 250 µm to 4500 µm, or 250 µm to 4400 µm, or 250 µm to 4300 µm, or 250 µm to 4200 µm, or 250 µm to 4100 µm, or 250 µm to 4000 µm, or 250 µm to 3900 µm, or 250 µm to 3800 µm, or 250 µm to 3700 µm, or 250 µm to 3600 µm, or 250 µm to 3500 µm, or 250 µm to 3400 µm, or 250 µm to 3300 µm, or 250 µm to 3200 µm, or 250 µm to 3100 µm, or 250 µm to 3000 µm, or 250 µm to 2900 µm, or 250 µm to 2800 µm, or 250 µm to 2700 µm, or 250 µm to 2600 µm, or 250 µm to 2500 µm, or 250 µm to 2400 µm, or 250 µm to 2300 µm, or 250 µm to 2200 µm, or 250 µm to 2100 µm, or 250 µm to 2000 µm, or 250 µm to 1900 µm, or 250 µm to 1800 µm, or 250 µm to 1700 µm, or 250 µm to 1600 µm, or 250 µm to 1500 µm, or 250 µm to 1400 µm, or 250 µm to 1300 µm, or 250 µm to 1200 µm, or 250 µm to 1100 µm, or 250 µm to 1000 µm, or 250 µm to 950 µm, or 250 µm to 900 µm, or 250 µm to 850 µm, or 250 µm to 800 µm, or 250 µm to 750 µm, or 250 µ m to 700 µm, or 250 µm to 650 µm, or 250 µm to 600 µm, or 250 µm to 550 µm, or 250 µm to 500 µm.

In embodiments, the agglomerates have a mass-weighted mean particle size of 500 µm to 7500 µm, or 500 µm to 7400 µm, or 500 µm to 7300 µm, or 500 µm to 7200 µm, or 500 µm to 7100 µm, or 500 µm to 7000 µm, or 500 µm to 6900 µm, or 500 µm to 6800 µm, or 500 µm to 6700 µm, or 500 µm to 6600 µm, or 500 µm to 6500 µm, or 500 µm to 6400 µm, or 500 µm to 6300 µm, or 500 µm to 6200 µm, or 500 µm to 6100 µm, or 500 µm to 6000 µm, or 500 µm to 5900 µm, or 500 µm to 5800 µm, or 500 µm to 5700 µm, or 500 µm to 5600 µm, or 500 µm to 5500 µm, or 500 µm to 5400 µm, or 500 µm to 5300 µm, or 500 µm to 5200 µm, or 500 µm to 5100 µm, or 500 µm to 5000 µm, or 500 µm to 4900 µm, or 500 µm to 4800 µm, or 500 µm to 4700 µm, or 500 µm to 4600 µm, or 500 µm to 4500 µm, or 500 µm to 4400 µm, or 500 µm to 4300 µm, or 500 µm to 4200 µm, or 500 µm to 4100 µm, or 500 µm to 4000 µm, or 500 µm to 3900 µm, or 500 µm to 3800 µm, or 500 µm to 3700 µm, or 500 µm to 3600 µm, or 500 µm to 3500 µm, or 500 µm to 3400 µm, or 500 µm to 3300 µm, or 500 µm to 3200 µm, or 500 µm to 3100 µm, or 500 µm to 3000 µm, or 500 µm to 2900 µm, or 500 µm to 2800 µm, or 500 µm to 2700 µm, or 500 µm to 2600 µm, or 500 µm to 2500 µm, or 500 µm to 2400 µm, or 500 µm to 2300 µm, or 500 µm to 2200 µm, or 500 µm to 2100 µm, or 500 µm to 2000 µm, or 500 µm to 1900 µm, or 500 µm to 1800 µm, or 500 µm to 1700 µm, or 500 µm to 1600 µm, or 500 µm to 1500 µm, or 500 µm to 1400 µm, or 500 µm to 1300 µm, or 500 µm to 1200 µm, or 500 µm to 1100 µm, or 500 µm to 1000 µm, or 500 µm to 950 µm, or 500 µm to 900 µm, or 500 µm to 850 µm, or 500 µm to 800 µm, or 500 µm to 750 µm.

The particle properties, such as the particle size, of the agglomerates is chosen based on the at least two immiscible thermoplastic polymers and the envisaged properties of the polymer composition.

In embodiments, the agglomerates have a polydispersity index equal to or lower than 0.1.

The envelope density of an agglomerate refers to the mass of an agglomerate divided by the total volume the agglomerate occupies, where the volume encompasses the outer boundaries of the agglomerate, including the interstitial spaces, voids, and pores within the structure but excluding any void spaces external to the agglomerate. The volume is typically measured using displacement techniques with a non-penetrating fluid or gas that conforms to the outer surface of the agglomerate. Envelope density, expressed in units such as kilograms per cubic meter, is used to assess the overall compactness and structural integrity of the agglomerate, accounting for its porosity and spatial configuration.

In embodiments, the agglomerates have an envelope density of 100 kg/m³ to 1000 kg/m³, or 100 kg/m³ to 950 kg/m³, or 100 kg/m³ to 900 kg/m³, or 100 kg/m³ to 850 kg/m³, or 100 kg/m³ to 800 kg/m³, or 100 kg/m³ to 750 kg/m³, or 100 kg/m³ to 700 kg/m³, or 100 kg/m³ to 650 kg/m³, or 100 kg/m³ to 600 kg/m³, or 100 kg/m³ to 550 kg/m³, or 100 kg/m³ to 500 kg/m³, or 100 kg/m³ to 450 kg/m³, or 100 kg/m³ to 400 kg/m³.

In embodiments, the agglomerates have an envelope density of 200 kg/m³ to 1000 kg/m³, or 200 kg/m³ to 950 kg/m³, or 200 kg/m³ to 900 kg/m³, or 200 kg/m³ to 850 kg/m³, or 200 kg/m³ to 800 kg/m³, or 200 kg/m³ to 750 kg/m³, or 200 kg/m³ to 700 kg/m³, or 200 kg/m³ to 650 kg/m³, or 200 kg/m³ to 600 kg/m³, or 200 kg/m³ to 550 kg/m³, or 200 kg/m³ to 500 kg/m³, or 200 kg/m³ to 450 kg/m³, or 200 kg/m³ to 400 kg/m³.

In embodiments, the agglomerates have an envelope density of 250 kg/m³ to 1000 kg/m³, or 250 kg/m³ to 950 kg/m³, or 250 kg/m³ to 900 kg/m³, or 250 kg/m³ to 850 kg/m³, or 250 kg/m³ to 800 kg/m³, or 250 kg/m³ to 750 kg/m³, or 250 kg/m³ to 700 kg/m³, or 250 kg/m³ to 650 kg/m³, or 250 kg/m³ to 600 kg/m³, or 250 kg/m³ to 550 kg/m³, or 250 kg/m³ to 500 kg/m³, or 250 kg/m³ to 450 kg/m³, or 250 kg/m³ to 400 kg/m³.

Without being bound to this theory, the relative low envelop density of the agglomerates, i.e. their high internal surface area, leads to a lower emission of VOCs and less unwanted odors during the production of polymer compositions.

Compounding the at least two immiscible thermoplastic polymers in step (c) refers to a process in which the at least two immiscible thermoplastic polymers are mechanically blended in the melt phase with the agglomerates to achieve desired properties or performance characteristics in the polymer composition. This process typically involves the use of compounders, such as extruders or mixers, where the thermoplastic polymers are melted and mixed with the agglomerates. A variety of commonly used compounders is suitable with the invention, which is not limiting to the invention. Without being bound to this theory, the agglomerates loose their structural integrity upon compounding, releasing the pyrolyzed biomass, the agglomerating polymer and the one or more additives into the melt phase. These released compounds are homogenized in the polymer phase during the compounding.

Compounding can be performed with a range of machinery designed to efficiently blend, melt, and homogenize thermoplastic polymers with additives, fillers, or reinforcements to produce a uniform material with enhanced properties. Key equipment includes extruders, such as single-screw extruders, which are suitable for straightforward compounding tasks, and twinscrew extruders, which offer enhanced mixing capabilities through intermeshing or co-rotating screws, making them ideal for processing complex formulations. Internal mixers, such as Banbury mixers, are used for batch processing and achieving high shear and thorough dispersion of components. Kneaders provide controlled mixing for highly viscous or specialty formulations. High-speed mixers and tumble mixers can be employed for pre-mixing or dry blending of materials prior to thermal processing. Ancillary equipment, such as feeders, pelletizers, and screen changers, is often integrated into the compounding line to facilitate precise feeding, size reduction, and filtration of the compounded material. The choice of equipment depends on the nature of the at least two immiscible thermoplastic polymers, and the desired properties of the polymer composition, and the specific processing requirements.

In embodiments, the weight concentration of the agglomerates during the compounding in step (c) is 1 wt.% to 50 wt.%, or 1 wt.% to 45 wt.%, or 1 wt.% to 40 wt.%, or 1 wt.% to 35 wt.%, or 1 wt.% to 30 wt.%, or 1 wt.% to 25 wt.%, or 1 wt.% to 20 wt.%, or 1 wt.% to 15 wt.%, or 1 wt.% to 10 wt.%, or 5 wt.% to 50 wt.%, or 5 wt.% to 45 wt.%, or 5 wt.% to 40 wt.%, or 5 wt.% to 35 wt.%, or 5 wt.% to 30 wt.%, or 5 wt.% to 25 wt.%, or 5 wt.% to 20 wt.%, or 5 wt.% to 15 wt.%, or 5 wt.% to 10 wt.%, or 10 wt.% to 50 wt.%, or 10 wt.% to 45 wt.%, or 10 wt.% to 40 wt.%, or 10 wt.% to 35 wt.%, or 10 wt.% to 30 wt.%, or 10 wt.% to 25 wt.%, or 10 wt.% to 20 wt.%, or 10 wt.% to 15 wt.%.

In embodiments, the weight concentration of the agglomerates during the compounding in step (c) is about 5 wt.%, or about 10 wt.%, or about 15 wt.%, or about 20 wt.%, or about 25 wt.%, or about 30 wt.%, or about 35 wt.%, or about 40 wt.%, or about 45 wt.%, or about 50 wt.%, wherein about means +/- 5 wt.%.

In embodiments, the weight concentration of the agglomerates during the compounding in step (c) is about 5 wt.%, or about 10 wt.%, or about 15 wt.%, or about 20 wt.%, or about 25 wt.%, or about 30 wt.%, or about 35 wt.%, or about 40 wt.%, or about 45 wt.%, or about 50 wt.%, wherein about means +/- 2.5 wt.%.

In embodiments, the weight concentration of the agglomerates during the compounding in step (c) is about 5 wt.%, or about 10 wt.%, or about 15 wt.%, or about 20 wt.%, or about 25 wt.%, or about 30 wt.%, or about 35 wt.%, or about 40 wt.%, or about 45 wt.%, or about 50 wt.%, wherein about means +/-1 wt.%.

In embodiments, the weight concentration of the agglomerates during the compounding in step (c) is about 5 wt.%, or about 10 wt.%, or about 15 wt.%, or about 20 wt.%, or about 25 wt.%, or about 30 wt.%, or about 35 wt.%, or about 40 wt.%, or about 45 wt.%, or about 50 wt.%, wherein about means +/- 0.5 wt.%.

The weight concentration of the agglomerates during the compounding in step (c) is chosen based on the at least two immiscible thermoplastic polymers and the envisaged properties of the polymer composition.

The method of the invention may comprise additional steps, especially but not limited to steps after the compounding (c), to obtain the polymer composition.

The polymer composition obtained by the method of the invention may be a final product or an intermediate product. In this context, the polymer composition is considered a final product if it will not undergo additional process steps in the melt phase before the polymer composition is put to its envisioned industrial or consumer use. Likewise, the polymer composition is considered to be an intermediate product if it will undergo additional process steps in the melt phase before the polymer composition is put to its envisioned industrial or consumer use.

Wherever the term polymer composition is used in this application, reference is made to the product of the method of the invention, unless explicitly mentioned otherwise.

### Further methods and uses

In this section, several additional methods and uses are described. The features and embodiments disclosed above for the methods of the invention apply mutatis mutandis to these additional methods and uses.

In an aspect, the invention provides method of recycling a plastic material or item, comprising the steps of:
(a) obtaining at least two immiscible thermoplastic polymers by mechanically recycling the plastic material or item;
(b) producing a polymer composition using the at least two immiscible thermoplastic polymers via method of the invention; and
(c) shaping the polymer composition into a recycled material.

The shaping in step (c) of this method has already been described above as being part of the method according to the invention. Whether the shaping is part of the method of the invention (i.e. in step (b) of the current method) or of step (c) of the current method is insubstantial to the invention.

A recycled material can be seen an intermediate material or item, or a final material or item, that can generally be resold to and/or used by third parties.

In an aspect, the invention provides the use of agglomerates as defined above to enhance a mechanical property of a polymer composition comprising at least two immiscible thermoplastic polymers, wherein the agglomerates are blended with the polymer composition in the melt phase, wherein the enhanced mechanical property is one or more of the following:
(a) a higher miscibility of the at least two immiscible thermoplastic polymers in polymer composition;
(b) a higher melt strength of the polymer composition;
(c) a longer elongation at break of the polymer composition;
(d) a lower occurrence of shrinkage voids.

In this context, the term polymer composition can be used for both the end product of the method of the invention and this use. These two are related in the sense that the agglomerates in the method of the invention may result in (and can thus be used for) the same mechanical properties in the product of the method of the invention.

Miscibility of thermoplastic polymers in a polymer composition refers to the extent to which the at least two thermoplastic polymers form a homogeneous single-phase material at the molecular level, as opposed to existing as distinct phases. Miscibility is critical in polymer compositions, as poor miscibility often results in phase separation, where incompatible polymers form discrete domains with weak interfacial adhesion, leading to compromised mechanical, thermal, and optical properties. The miscibility of polymers can be evaluated using techniques such as differential scanning calorimetry (DSC) to identify single or multiple glass transition temperatures (Tg), scanning electron microscopy (SEM) or transmission electron microscopy (TEM) to observe phase dispersion, or dynamic mechanical analysis (DMA) to assess the material's viscoelastic properties.

The use of the agglomerates significantly improves (increases) miscibility by promoting interfacial adhesion and reducing phase separation. This increased miscibility enhances the mechanical strength, impact resistance, thermal stability, and optical clarity of the polymer composition, making it suitable for demanding applications in industries such as packaging, automotive, and consumer goods.

Melt strength of a polymer composition of thermoplastic polymers refers to the resistance of the polymer melt to deformation under tensile stress, reflecting its ability to maintain structural integrity during high-temperature processing. Melt strength is typically measured using a melt strength tester or extensional rheometer, where the polymer melt is extruded through a die and stretched at a controlled speed while the force required to elongate the melt is recorded. Higher melt strength is advantageous in processes such as blow molding, film blowing, thermoforming, and extrusion foaming, as it enables the production of uniform, defect-free products by minimizing issues such as sagging, uneven thickness, or melt fracture. Polymer compositions with enhanced melt strength exhibit improved processability, better material distribution, and the ability to form complex or large structures without compromising mechanical properties.

Elongation at break of a polymer composition of thermoplastic polymers refers to the maximum strain a polymer material can withstand before breaking when subjected to tensile stress, expressed as a percentage of the material's original length. It is a critical parameter for evaluating the flexibility and ductility of a polymer composition. Elongation at break is typically measured using a tensile testing machine, in accordance with standardized test methods such as ASTM D638 or ISO 527, where a specimen is stretched at a constant rate until failure, and the strain is recorded. Polymer compositions with higher elongation at break offer significant benefits, including enhanced toughness, improved impact resistance, and greater flexibility, which are desirable in applications requiring durable and deformable materials. These properties are particularly advantageous in industries such as packaging, automotive, and medical devices, where materials must endure stretching, bending, or impact without fracturing.

Shrinkage of voids during the production of a polymer composition of thermoplastic polymers, or plastic materials or items derived therefrom, refers to the formation and subsequent reduction in size or elimination of internal cavities or gaps within a molded or extruded polymer product as the material cools and solidifies. Shrinkage voids arise due to non-uniform cooling, differences in polymer density between the molten and solid states, or insufficient packing pressure during processing. The occurrence and severity of shrinkage voids can be assessed through techniques such as X-ray computed tomography (CT), ultrasonic scanning, or visual inspection of cross-sections, often quantified by the size, number, and distribution of voids within the material. Minimizing shrinkage voids improves the mechanical strength, dimensional stability, and aesthetic quality of the final material or item, making it critical for applications requiring high-performance or precision parts. These advancements contribute to more reliable and durable polymer components in industries such as automotive, aerospace, packaging, and consumer goods.

In an aspect, the invention provides the use of agglomerates to reduce the emission of volatile organic compounds from a material comprising at least two immiscible thermoplastic polymers, wherein the agglomerates are blended with a polymer composition comprising the at least two immiscible thermoplastic polymers in the melt phase during the production of the material.

Volatile organic compounds (VOCs) refer to a class of organic chemicals characterized by high vapor pressure and low boiling points, which cause them to evaporate easily into the atmosphere at ambient temperatures. VOCs are emitted during the production and use of plastic materials and items, primarily as byproducts of polymerization, solvent usage, or the thermal processing of plastics. Additionally, VOCs may originate from additives, residual monomers, or degradation products in plastics, leading to emissions during their application, storage, or disposal. The presence of VOCs poses environmental and health concerns, contributing to air pollution, smog formation, and potential adverse effects such as respiratory irritation and long-term health risks for humans. Furthermore, regulatory frameworks increasingly mandate stricter limits on VOC emissions to reduce their impact.

Developing plastics and production methods that minimize VOC emissions provides significant benefits, including improved workplace safety, enhanced product quality, and reduced environmental impact. Additionally, lowering VOC emissions aligns with sustainability goals, enabling compliance with regulatory standards and fostering the development of environmentally responsible manufacturing practices.

The use of agglomerates as described herein can lower the impact strength of the polymer composition compared to a corresponding polymer compositions which was produced without the use of agglomerates. Nonetheless, it is an additional advantage of the method of the invention that pyrolyzed biomass can be added while maintaining an acceptable impact strength.

Impact strength of a polymer composition (i.e. as a plastic material or item) refers to the material's ability to resist fracture or deformation when subjected to sudden or dynamic forces, indicating its toughness and energy absorption capacity. Impact strength is typically measured using standardized tests such as the Charpy impact test, where a notched or unnotched specimen is struck by a pendulum under controlled conditions, and the energy absorbed during fracture is recorded. The results are expressed in units of energy per unit cross-sectional area (e.g., joules per square meter). High impact strength is particularly beneficial for applications requiring durability and resistance to mechanical shock, such as automotive components, packaging materials, and structural parts.

A polymer composition with sufficiently high impact strength provides several advantages, including enhanced reliability, extended service life, and reduced risk of catastrophic failure under stress. This is essential in demanding environments where materials must withstand sudden loads, impacts, or collisions without compromising structural integrity or functionality.

### General definitions

In this document and in its claims, the verb "to comprise" and its conjugations is used in its non-limiting sense to mean that items following the word are included, but items not specifically mentioned are not excluded. In addition the verb "to consist" may be replaced by "to consist essentially of" meaning that a product, a method or a use as defined herein may comprise additional component(s) respectively additional step(s) than the ones specifically identified, said additional component(s), respectively step(s) not altering the unique characteristic of the invention.

In addition, reference to an element by the indefinite article "a" or "an" does not exclude the possibility that more than one of the element is present, unless the context clearly requires that there be one and only one of the elements. The indefinite article "a" or "an" thus usually means "at least one".

"Mass-weighted mean particle size" refers to the average particle size of a material, calculated by weighting the size of individual particles by their respective masses, to provide a size distribution measurement that accounts for the influence of larger or heavier particles. It is determined using techniques such as laser diffraction, sieve analysis, or dynamic light scattering, and is mathematically expressed as the sum of the products of each particle size and its corresponding mass fraction, divided by the total mass of all particles in the sample.

All patent and literature references cited in the present specification are hereby incorporated by reference in their entirety.

### Legend to the figures

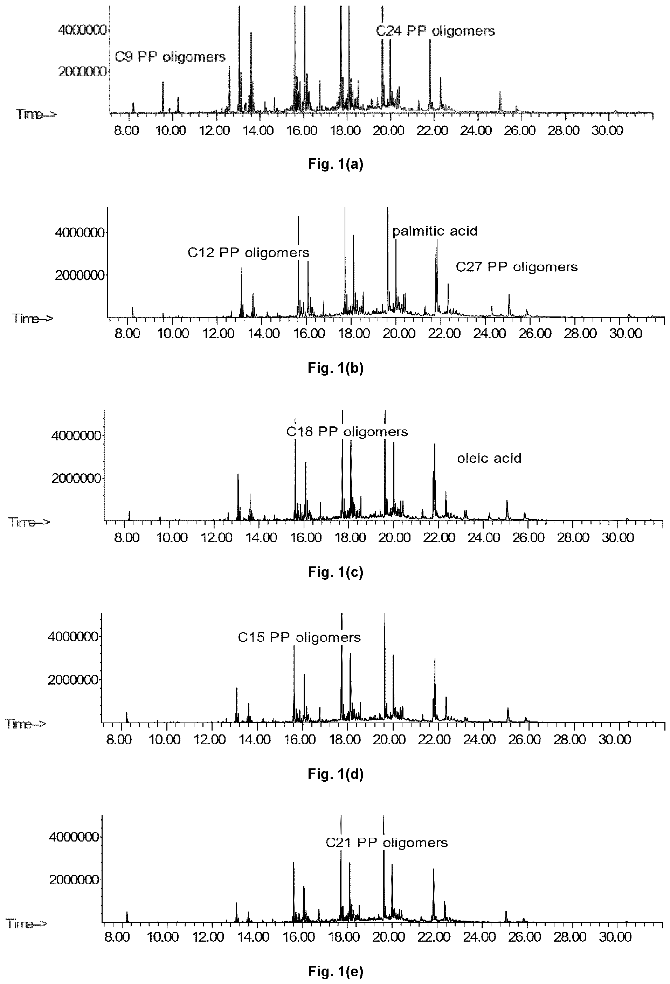

**Figures 1(a)-(e)** show that the polymer compositions prepared via a method according to the invention are characterized by a lower VOC emission than the control, as determined by VDA 278 (120°C, 30 minutes). One or more 1 cm diameter samples are heated in a glass tube at a fixed temperature under an inert gas flow. The gas flow is lead over a tenax filled tube where volatile organic compounds (VOC's) are trapped. The tenax tube with the VOC's is thermally desorbed. Released VOC's are cryo-trapped and injected into a GCMS. Gas chromatography with Agilent MSD detector is used.
Figure 1(a) refers to the control (no agglomerates used).
Figures 1(b)-(e) refer to polymer compositions that were produced using respectively 10 wt.%, 20 wt.%, 30 wt.% and 40 wt.% agglomerates.
**Figure** 2 shows that the polymer composition prepared via a method according to invention, using 10 wt.% of agglomerates during the compounding, has a longer elongation at break. The stress-strain curve is obtained via tensile tests at 1 mm/min and 50 mm/min on an ISO 527 tensile bar.
**Figure** 3 shows that the polymer compositions prepared via a method according to invention have an acceptable impact strength. Virgin (i.e. newly synthesized, non-recycled) polypropylene has an impact strength of about 3 kJ/m². Impact strength was assessed via a Sharpy impact test with a 1J hammer.

### Examples

The invention is explained in more detail below with a number of examples, which are not to be construed as limiting the scope of the invention. The invention is not limited to the forms of implementation described in the cases given as examples. The invention also extends to each combination of measures as described above, independently from each other.

### Example 1

A polypropylene recyclate (rPP) having 90 wt.% purity was obtained. The rPP was contaminated with immiscible polyethylene. The rPP was subsequently subjected to the method of the invention with respectively 10 wt.%, 20 wt.%, 30 wt.% and 40 wt.% of agglomerates of pyrolyzed biomass used during the compounding in step (c). A co-rotation twin screw extruder LID 36.5 was used. Samples for the tests below were produced with an Arburg Allrounder 320S injection molder. As a control, a similar process without the addition of any pyrolyzed biomass was performed.

A lower VOC emission of the samples corresponding to 10 wt.%, 20 wt.%, 30 wt.% and 40 wt.% of agglomerates of pyrolyzed biomass is shown in Figures 1(a)-(e).

A longer elongation at break of that the polymer composition prepared via a method according to invention, using 10 wt.% of agglomerates during the compounding, compared to the control is shown in Figure (2).

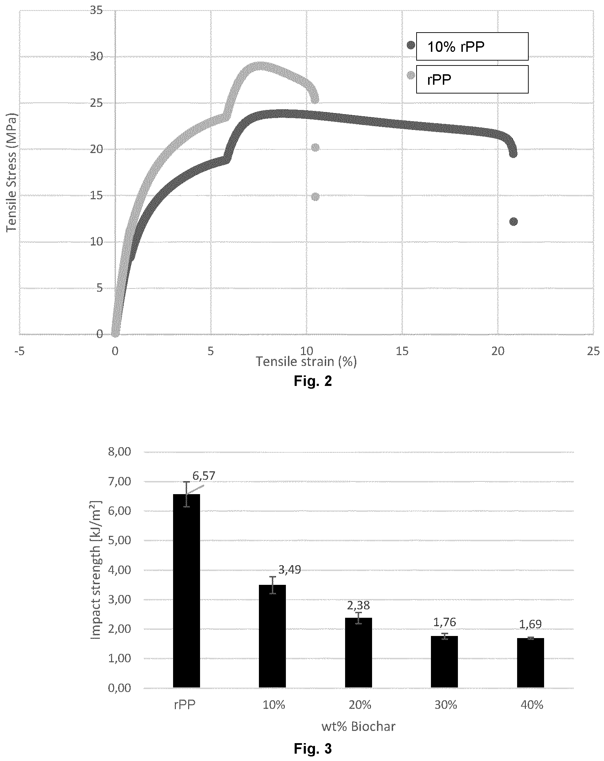

The impact strength of the polymer compositions prepared via a method according to invention is shown in Figure 3.

## Claims

1. A method of producing a polymer composition, comprising the steps of:
(a) obtaining at least two immiscible thermoplastic polymers, preferably by mechanically recycling a plastic material or item;
(b) obtaining agglomerates of a pyrolyzed biomass, wherein the agglomerates have a mass-weighted mean particle size of 250 µm to 7500 µm; and
(c) compounding the at least two immiscible thermoplastic polymers with the agglomerates.

2. The method according to claim 1, wherein step (b) comprises the steps of:
(b1) pyrolyzing a biomass at a temperature of 200°C to 1000°C to form a crude composition;
(b2) controlling the particle size distribution of the crude composition to form the pyrolyzed biomass having a mass-weighted mean particle size of lower than 1000 µm; and
(b3) mixing the pyrolyzed biomass with an agglomerating polymer and one or more additives to form the agglomerates.

3. The method according to claim 2, step (b2) comprises grinding and calibrating the crude composition, preferably wherein calibrating comprises sieving.

4. The method according to claim 2 or 3, wherein the agglomerating polymer in step (b3) is miscible with and/or able to bind with each of the at least two immiscible polymers.

5. The method according to any one of claims 2 or 4, wherein the one or more additives in step (b3) comprise a compatibilizer and/or a tackifier.

6. The method according to any one of the preceding claims, wherein step (a) comprises mechanically recycling a plastic material or item, wherein the mechanically recycling comprises one or more of shredding, grinding, washing, separating, and pelletizing.

7. The method according to any one of the preceding claims, wherein the at least two immiscible thermoplastic polymers are selected from polyethylene, polypropylene, polyvinyl chloride, polyvinylidene chloride, polystyrene, polyamide, polyethylene terephthalate, polymethyl methacrylate, ethylene vinyl alcohol, thermoplastic polyurethane, and polyethylene vinyl acetate.

8. The method according to any one of the preceding claims, wherein the biomass is a lignocellulosic biomass.

9. The method according to any one of the preceding claims, wherein the pyrolyzed biomass has a mass-weighted mean particle size of 10 µm to 1000 µm, preferably 10 µm to 250 µm, more preferably 10 µm to 100 µm.

10. The method according to any one of the preceding claims, wherein the agglomerates have a mass-weighted mean particle size of 500 µm to 5000 µm, preferably 500 µm to 2500 µm.

11. The method according to anyone of the preceding claims, wherein the agglomerates have an envelope density of 100 kg/m³ to 1000 kg/m³, preferably 200 kg/m³ to 900 kg/m³, more preferably 250 kg/m³ to 400 kg/m³.

12. The method according to anyone of the preceding claims, wherein the weight concentration of the agglomerates during the compounding in step (c) is 10 wt.% to 40 wt.%.

13. A method of recycling a plastic material or item, comprising the steps of:
(a) obtaining at least two immiscible thermoplastic polymers by mechanically recycling the plastic material or item as defined in claim 5;
(b) producing a polymer composition using the at least two immiscible thermoplastic polymers as defined in any one of the preceding claims; and
(c) shaping the polymer composition into a recycled material.

14. The use of agglomerates as defined in any one of claims 1 to 12 to enhance a mechanical property of a polymer composition comprising at least two immiscible thermoplastic polymers, wherein the agglomerates are blended with the polymer composition in the melt phase, wherein the enhanced mechanical property is one or more of the following:
(a) a higher miscibility of the at least two immiscible thermoplastic polymers in polymer composition;
(b) a higher melt strength of the polymer composition;
(c) a longer elongation at break of the polymer composition;
(d) a lower occurrence of shrinkage voids.

15. The use of agglomerates as defined in any one of claims 1 to 12 to reduce the emission of volatile organic compounds from a material or item comprising at least two immiscible thermoplastic polymers, wherein the agglomerates are blended with a polymer composition comprising the at least two immiscible thermoplastic polymers in the melt phase during the production of the material.
